# EUROPEAN PATENT APPLICATION

(11) **EP 2 657 991 A1**
(43) Date of publication of application: **30.10.2013**
(21) Application number: 11850449.7
(22) Date of filing: 22.12.2011
(51) Int. Cl.: H01L 33/00, H05B 37/02

(54) **LED LIGHT-EMITTING DEVICE, TERMINAL NUMBER CONVERTER, AND ILLUMINATION DEVICE**

(30) Priority: 24.12.2010 JP 2010288953
(71) Applicant: Mitsubishi Chemical Corporation, Chiyoda-ku Tokyo 100-8251 (JP)
(72) Inventor: TAKEDA, Toru, Tokyo 100-8251 (JP)
(74) Representative: Vossius & Partner
(86) International application number: PCT/JP2011/079894
(87) International publication number: WO 2012/086792

(57) **Abstract**

An LED light-emitting device includes: a three-terminal LED circuit which includes a first LED group constituted by a single light-emitting diode or a plurality of light-emitting diodes connected in series, a second LED group constituted by a single light-emitting diode or a plurality of light-emitting diodes connected in series, and an LED common terminal shared by anodes of the first LED group and the second LED group or cathodes thereof, and which has three terminals including both end terminals of the LED groups; and a three-terminal regulator circuit which includes a first regulating unit constituted by a unidirectional current regulator circuit, a second regulating unit constituted by a unidirectional current regulator circuit, and a regulator circuit common terminal connected with the first regulating unit and the second regulating unit and shared by anodes or cathodes thereof so as to exhibit a reverse polarity with respect to the three-terminal LED circuit.

## Description

### TECHNICAL FIELD

The present invention relates to an LED light-emitting device, a terminal count converter and an illumination apparatus.

### BACKGROUND ART

Lately, an illumination apparatuses using a light-emitting diode (LED), which is a semiconductor light-emitting element, is widely proposed for saving energy and various other purposes, instead of a conventional illumination apparatus. One function desired for an LED illumination apparatus is a toning function. As an application to a light source of a tonable illumination apparatus, a white LED where two white light generation systems each generating white light having a different color temperature are integrated in one package, and a light-emitting module using this white LED have been proposed (e.g. see Patent Document 1).

Furthermore, Patent Document 2 discloses a technique in which a power supply voltage is connected to the anode side of an LED, via a diode for backflow prevention, and a resistor to limit forward current of the LED, and another power supply voltage is connected to the anode side in parallel there with via a switch circuit and a resistor to limit forward current.

Patent Document 1: Japanese Patent Application Laid-Open No. 2009-231525
Patent Document 2: Japanese Patent Application Laid-Open No. 2001-45406

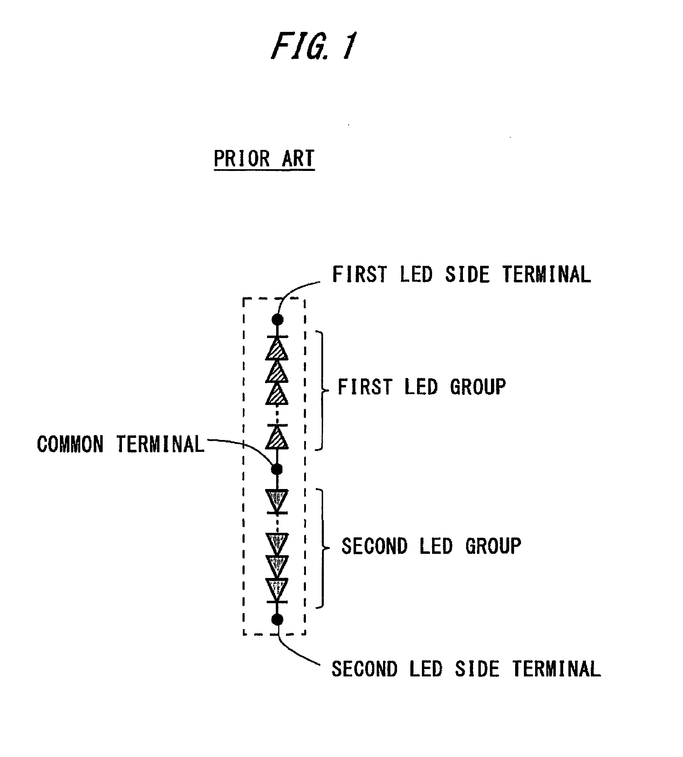

FIG. 1 is an example of a prior art of a three-terminal. LED illumination apparatus in which anodes are shared as a common terminal. In the LED illumination apparatus according to this prior art, a first LED group (e.g. high color temperature group) and a second LED group (e.g. low color temperature group) are connected in series with each other at the anode side. In the case of this LED illumination apparatus, the color temperature can be changed and adjusted by changing current supplied to the first LED group and the second LED group respectively.

LED illumination apparatuses are now being introduced instead of conventional illumination apparatuses (e.g. incandescent lamps and fluorescent lamps) for saving energy and various other purposes. In the case of installing a three-terminal LED illumination apparatus to replace a conventional illumination apparatus for which two feeder lines are provided, the three-terminal LED illumination apparatus cannot be used unless construction to add another feeder line is performed. The need for this wiring construction is an obstacle to introduce and popularize LED illumination apparatuses. Further, most loads operate by power supplied from two feeder lines, and a load that requires three feeder lines is inconvenient. This problem is not limited to an LED illumination apparatus, but is common to LED apparatuses in general (e.g. LED chips, LED modules).

### SUMMARY OF THE INVENTION

With the foregoing in view, it is an object of the present invention to provide a technique to convert a three-terminal LED device into a two-terminal LED device.

To solve the above mentioned problem, the present invention uses the following means. In other words, an LED light-emitting device according to the present invention includes: a three-terminal LED circuit which includes a first LED group constituted by a single light-emitting diode or a plurality of light-emitting diodes connected in series, a second LED group constituted by a single light-emitting diode or a plurality of light-emitting diodes connected in series, and an LED common terminal shared by anodes of the first LED group and the second LED group or cathodes thereof, and which has three terminals including both end terminals of the LED groups; and a three-terminal regulator circuit which includes a first regulating unit constituted by a unidirectional current regulator circuit, a second regulating unit constituted by a unidirectional current regulator circuit, and a regulator circuit common terminal connected with the first regulating unit and the second regulating unit and shared by anodes or cathodes thereof so as to exhibit a reverse polarity with respect to the three-terminal LED circuit, wherein a two-terminal circuit is configured by connecting the LED common terminal and the regulator circuit common terminal with each other, and connecting the remaining two terminals of the three-terminal LED circuit with the remaining two terminals of the three-terminal regulator circuit respectively.

The LED light-emitting device according to the present invention becomes a two-terminal circuit by connecting the LED common terminal and the regulator circuit common terminal with each other, and connecting the remaining two terminals of the three-terminal LED circuit with the remaining two terminals of the three-terminal regulator circuit respectively. As a result, even if two conventional feeder lines are provided, an LED illumination apparatus including an LED light-emitting device can be installed without performing construction to add one more feeder line. AC current is supplied to one of a pair (two) of terminals, and for example, in a positive half cycle generated by AC one of the first regulating unit and the second regulating unit regulates a flow of positive current in one of the half cycles, and current is supplied to one of the first LED group and the second LED group, and in a negative half cycle, the other regulating unit regulates the flow of the positive current in the other half cycle, and current is supplied to the other LED group, whereby the first LED group and the second LED group turn ON in each positive and negative cycle. In the LED light-emitting device configured like this, the brightness (amount of luminescence) of white light, which is emitted from the entire LED light-emitting device, can be adjusted by adjusting the total value of the drive current which is supplied to the first LED group and the second LED group in each positive or negative half cycle, generated by AC, for example. If the ratio of drive current to be supplied to the first LED group and the second LED group is changed, chromaticity of the white light emitted from the entire LED light-emitting device can be adjusted.

Here each regulating unit is constituted by an element or a circuit that has at least one of a rectification function to regulate the flow of current, a protection function to protect the LED light-emitting device from overcurrent, and a constant current function that supplies constant current. For example, each regulating unit is constituted by a diode or a Zener diode. If a diode is used for a regulating unit, flow of current can be regulated. If a Zener diode is used for the unidirectional current regulator circuit, the LED light-emitting device can be protected from overcurrent. Each regulating unit may include a constant current circuit. If a constant current is included in the configuration, constant current can be supplied to the LED light-emitting device. An operational amplifier, for example, may be used instead of the constant current circuit, but a constant current circuit, including transistors, excels in terms of cost compared with the operational amplifier.

The first LED group and the second LED group may be LED elements of which emission spectrums (emission wavelengths) are different from each other. Chromaticity (chromaticity is a concept that includes hue, color temperature or the like, and is used in this sense in the following description) of the first LED group and of the second LED group may be different from each other. If an LED element constituting each LED group has a different emission wavelength from each other, each LED group can emit a different emission spectrum from each other. For example, a fluorescent substance, that emits white light having a predetermined chromaticity if stimulated (excited) by light having a predetermined emission wavelength, is embedded in an LED element constituting one LED group, and a fluorescent substance, that emits white light having a chromaticity that is different from the predetermined chromaticity if stimulated (excited) by light having a predetermined emission wavelength, is embedded in an LED element constituting the other LED group. Then the brightness (amount of luminescence) of white light emitted from the entire LED light-emitting device can be adjusted by adjusting the total of the drive current values that are supplied to the first LED group and the second LED group in each of the positive or negative half cycle generated by the AC power supply. Further, chromaticity of the white light emitted from the entire LED light-emitting device can be adjusted by changing the ratio of the drive current to be supplied to the first LED group and to the second LED group.

The LED light-emitting device according to the present invention may further include a switch that is located between a power source and the LED common circuit to supply current to the LED common terminal. In the case of the above described LED light-emitting device, the first LED group and the second LED group alternately turn ON. Whereas in the case of the LED light-emitting device according to the present invention, the first LED group and the second LED group can turn ON simultaneously by the switch, that allows supplying current to both the first LED group and the second LED group.

The present invention may be implemented as a terminal count converter constituting a part of the above mentioned LED light-emitting device. In concrete terms, the present invention is a terminal count converter, connected with a three-terminal LED circuit which includes a first LED group constituted by a single light-emitting diode or a plurality of light-emitting diodes connected in series, a second LED group constituted by a single light-emitting diode or a plurality of light-emitting diodes connected in series, and an LED common terminal shared by anodes of the first LED group and the second LED group or cathodes thereof, and which has three terminals including both end terminals of the LED groups, including: a three-terminal regulator circuit which includes a first regulating unit constituted by a unidirectional current regulator circuit, a second regulating unit constituted by a unidirectional current regulator circuit, and a regulator circuit common terminal connected with the first regulating unit and the second regulating unit and shared by anodes or cathodes thereof so as to exhibit a reverse polarity with respect to the three-terminal LED circuit, wherein the LED common terminal of the three-terminal LED circuit and the regulator circuit common terminal of the three-terminal regulator circuit are connected with each other, and the remaining two terminals of the three-terminal LED circuit are connected with the remaining two terminals of the three-terminal regulator circuit respectively, so that the three-terminal LED circuit functions as a two-terminal circuit.

The present invention may also be implemented as an LED illumination apparatus that includes the above mentioned LED light-emitting device. In this description, an LED includes organic electro-luminescence (organic EL).

According to the present invention, a technique to convert a three-terminal LED device into a two-terminal LED device can be provided.

### BRIEF DESCRIPTION OF THE DRAWING

FIG. 1 is an example of a prior art of a three-terminal LED illumination apparatus where the anodes are a common terminal;
FIG. 2 shows an LED light-emitting device according to Embodiment 1;
FIG. 3 shows an LED light-emitting device according to Embodiment 2;
FIG. 4 shows an LED light-emitting device according to Embodiment 3;
FIG. 5 shows an LED light-emitting device according to Embodiment 4;
FIG. 6 shows an LED light-emitting device according to Embodiment 5;
FIG. 7 shows a circuit configuration example of a white LED dimmer (white toning device) according to Embodiment 6;
FIG. 8A shows a commercial power supply waveform that is applied to the dimmer circuit, and FIG. 8B shows voltage applied to a trigger diode;
FIG. 9 shows a general circuit configuration of an LED illumination system according to Embodiment 7;
FIG. 10 shows a configuration example of a control circuit shown in FIG. 9;
FIG. 11 shows diagrams depicting waveforms of drive current that are supplied to an LED light-emitting device according to Embodiment 7 when brightness (amount of luminescence) is adjusted;
FIG. 12 shows diagrams depicting waveforms of drive current that are supplied to the LED light-emitting device according to Embodiment 7 when hue is adjusted; and
FIG. 13 shows a general configuration of a full lighting type illumination apparatus that includes an LED light-emitting device according to Embodiment 8.

### BEST MODE FOR CARRYING OUT THE INVENTION

Embodiments of the invention will now be described with reference to the drawings. The following embodiments are merely illustrative, and are not intended to limit the scope of the present invention.

### <Embodiment 1>

### [Configuration]

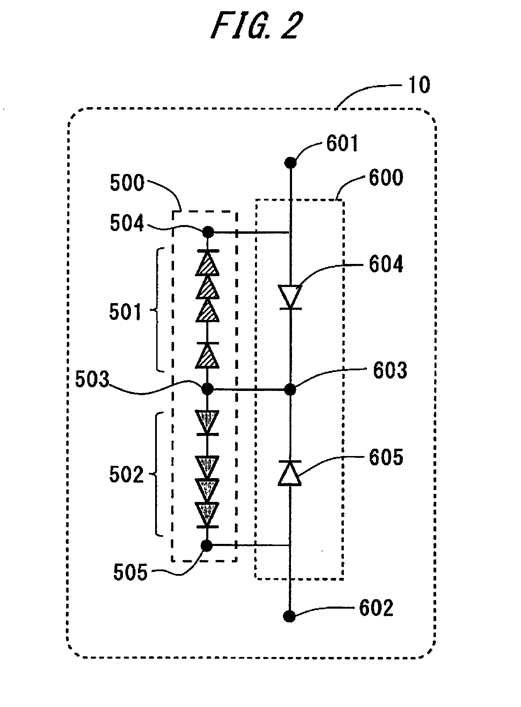

FIG. 2 shows an LED light-emitting device 10 according to Embodiment 1. The LED light emitting device 10 according to Embodiment 1 includes a three-terminal LED device 500 (corresponds to the three-terminal LED circuit of the present invention), and a three-terminal count converter 600 (corresponds to the three-terminal regulator circuit of the present invention). The terminal count converter 600 allows the three-terminal LED device 500 to operate as a two-terminal LED device. The terminal count converter 600 may be embedded in the LED light-emitting device 10 in advance, or may be used as a separate component that is installed on a conventional three-terminal LED device 500, or may be used as a component to replace a conventional terminal count converter 600 which is built into the LED light-emitting device 10.

### [Three-terminal LED device]

The three-terminal LED device 500 has a first LED group 501, a second LED group 502, an anode common terminal 503 (corresponds to the LED common terminal of the present invention), a cathode side terminal 504 of the first LED group 501, a cathode side terminal 505 of the second LED group and wiring. The first LED group 501 and the second LED group 502 are connected in series via the anode common terminal 503. The first LED group 501 and the second LED group 502 are constituted by a predetermined number of LED elements respectively.

### [Terminal count converter]

The terminal count converter 600 according to Embodiment 1 has a first terminal 601, a second terminal 602, a third terminal 603, a first diode 604 and a second diode 605. The first terminal 601 is located at the anode side of the first diode 604, and positive current is inputted to the first terminal 601 in one of the half cycles generated by AC current. The second terminal 602 is located at the anode side of the second diode 605, and positive current is inputted to the other half cycle. The third terminal 603 (corresponding to the regulator circuit common terminal of the present invention) is located between the first diode 604 and the second diode 605, and is connected with the anode common terminal 503. The cathode side terminal 504 of the first LED group 501 is connected between the first terminal 601 and the first diode 604. The cathode side terminal 505 of the second LED group 502 is connected between the second terminal 602 and the second diode 605.

### [Operation]

AC current, which is supplied from an AC power supply, is applied between the two terminals (first terminal 601 and second terminal 602) as drive current for the first LED group 501 and the second LED group 502 to emit light. If positive current is inputted from the first terminal 601, the positive current flows through the second LED group 502 via the first diode 604, the third terminal 603 and the anode common terminal 503, is consumed for lighting, and is then outputted from the second terminal 602. The negative current, on the other hand, flows through the first LED group 501 via the second terminal 602, the second diode 605 and the third terminal 603, is consumed for lighting, and is then outputted from the first terminal 601. Since the LED light-emitting device 10 has two terminals like this, the LED light-emitting device 10 can be connected to the provided-two feeder lines, and be driven by the AC current. If a transformer circuit for generating AC current for driving is disposed in the former stage of the first terminal 601 and the second terminal 602, the LED light-emitting device 10 can be driven with the desired AC voltage.

The spectrum of white light (emission wavelength region) emitted from the LED elements constituting the first LED group 501 is different from that emitted from the LED elements constituting the second LED group 502. For example, each of the LED elements constituting the first LED group 501 and the LED elements constituting the second LED group 502 has a 410 nm emission wavelength, and a 3.5 V terminal voltage in the case of forward current. In each LED element constituting the first LED group 501, a fluorescent substance, that emits white light at about 3000 K (Kelvin) if stimulated (excited) with light of which emission wavelength is 410 nm, is embedded. In each LED element constituting the second LED group 502, on the other hand, a fluorescent substance, that emits white light at about 5000 K (Kelvin) if stimulated (excited) with light of which emission wavelength is 410 nm, is embedded.
Each value of the exitation wavelength, chromaticity of white light to be emitted, terminal voltage or the like of the LED elements constituting the first LED group 501 and the LED elements constituting the second LED group 502 are examples, and can be changed as required. The LED elements constituting the first LED group 501 and the LED elements constituting the second LED group 502 may emit light of the same color, or light of different colors. Even if the LED groups emit light of a same color, chromaticity values thereof may be different.

In the case of the LED light-emitting device 10 having this configuration according to Embodiment 1, the brightness (amount of luminescence) of the white light emitted from the entire LED light-emitting device 10 can be adjusted by adjusting the total of the drive current values that are supplied to the first LED group 501 and the second LED group 502 in each of the positive or negative half cycle generated by the AC power supply. Further, chromaticity of the white light emitted from the entire LED light-emitting device 10 can be adjusted by changing the ratio of the drive current to be supplied to the first LED group 501 and to the second LED group 502.

### [Effect]

According to the LED light-emitting device 10 of Embodiment 1 described above, the three-terminal LED device 500 can be operated as a two-terminal LED device. As a result, even if two conventional feeder lines are provided, as in the case of installing the LED illumination apparatus replacing the conventional illumination apparatus, the LED illumination apparatus, including the LED light-emitting device 10 according to Embodiment 1, can be installed without construction to add one more feeder line. Furthermore, the LED light-emitting device 10 according to Embodiment 1 can be driven by AC current, and can easily perform toning by changing the respective lighting time of the first LED group 501 and the second LED group 502.

### <Embodiment 2>

### [Configuration]

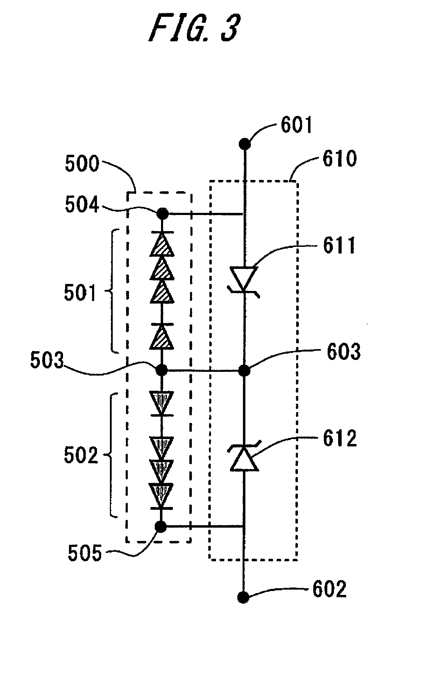

FIG. 3 shows an LED light-emitting device according to Embodiment 2. The LED light-emitting device according to Embodiment 2 certainly prevents damage to the LED device 510 due to overvoltage of the first LED group 501 and the second LED group 502 when overvoltage is applied from the first terminal 601 and the second terminal 602. The three-terminal LED device 500 according to Embodiment 2 is the same as the three-terminal LED device 500 according to Embodiment 1. In the LED light-emitting device according to Embodiment 2, a first Zener diode 611 and a second Zener diode 612 are used instead of the first diode 604 and the second diode 605 of the LED light-emitting device 10 according to Embodiment 1 respectively. A composing element the same as Embodiment 1 is denoted with a same reference numeral, for which detailed description is omitted.

### [Operation]

AC current, which is supplied from an AC power supply (not illustrated), is applied between the two terminals (first terminal 601 and second terminal 602) as the drive current for the first LED group 501 and the second LED group 502 to emit light. If positive current is inputted from the first terminal 601, the positive current in one of the half cycles flows through the second LED group 502 via the first Zener diode 611, the third terminal 603 and the anode common terminal 503, is consumed for lighting, and is then outputted from the second terminal 602. Even if overvoltage is generated between the first terminal 601 and the second terminal 602, damage to the LED device 500 can be prevented by the second Zener diode 612 breaking down first. The negative current from the second terminal 602, on the other hand, flows through the first LED group 501 via the second Zener diode 612, the third terminal 603 and the anode common terminal 503, is consumed for lighting, and is then outputted from the first terminal 601. Even if overvoltage is generated between the second terminal 602 and the first terminal 601, damage to the LED device 500 can be prevented by the first Zener diode 611 breaking down first. In other words, in the case of the LED light-emitting device according to Embodiment 2, the first LED group 501 and the second LED group 502 are protected with more certainty by the first Zener diode 611 or the second Zener diode 612 actively experiencing a breakdown phenomenon when overvoltage is generated. Furthermore, in Embodiment 2 as well, the three-terminal LED device 500 can be used as a two-terminal LED light-emitting device 10, and the LED light-emitting device 10 can be connected to the provided-two (pair of) feeder lines, and be driven by the AC current. If a transformer circuit that generates AC current for driving is disposed in the former stage of the first terminal 601 and the second terminal 602, the LED device 500 can be driven by desired AC voltage.

Just like the LED light-emitting device 10 according to Embodiment 1, the spectrum of white light (emission wavelength region) emitted from the LED elements constituting the first LED group 501 may be different from that emitted from the LED elements constituting the second LED group 502. Further, in the LED light-emitting device according to Embodiment 2 as well, brightness (amount of luminescence) of white light emitted from the entire LED light-emitting device can be adjusted by adjusting the total of the drive current values that are supplied to the first LED group 501 and the second LED group 502 in each of the positive or negative half cycle generated by the AC power supply. Furthermore, chromaticity of the white light emitted from the entire LED light-emitting device can be adjusted by changing the ratio of the drive current to be supplied to the first LED group 501 and to the second LED group 502.

### [Effect]

According to the LED light-emitting device of Embodiment 2 described above, the three-terminal LED device 500 can be operated as a two-terminal LED device. As a result, even if two conventional feeder lines are provided, as in the case of installing the LED illumination apparatus replacing the conventional illumination apparatus, the LED illumination apparatus, including the LED light-emitting device according to Embodiment 2, can be installed without construction to add one more feeder line. Furthermore, the LED light-emitting device according to Embodiment 2 can be driven by AC current, and can easily perform toning by changing the respective current that flows through the first LED group 501 and the second LED group 502. Also the first LED group 501 and the second LED group 502, in other words the LED light-emitting device can be protected with more certainty by the first Zener diode 611 or second Zener diode 612 actively experiencing a breakdown phenomena when overvoltage is generated.

### <Embodiment 3>

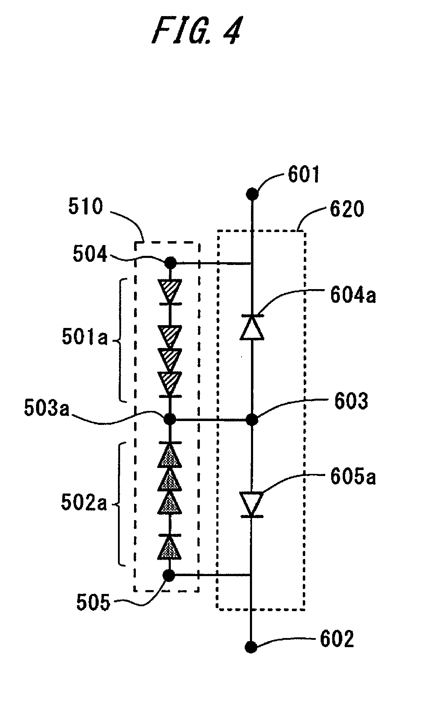

FIG. 4 shows an LED light-emitting device according to Embodiment 3. Just like Embodiment 1, the LED light-emitting device according to Embodiment 3 also allows the three-terminal device 510 to operate as a two-terminal LED device. A difference of Embodiment 3 from Embodiment 1 is the arrangement of a first LED group 501a and a second LED group 502a constituting the three-terminal LED device 500. The difference will be mainly described hereinbelow. A composing element the same as Embodiment 1. is denoted with a same reference numeral, for which detailed description is omitted.

### [Three-terminal LED device]

A three-terminal LED device 510 according to Embodiment 3 has a cathode common terminal 503a, instead of the anode common terminal 503 of Embodiment 1, and the first LED group 501a and the second LED group 502a are connected so as to exhibit a reverse polarity with respect to the first LED group 501 and the second LED group 502 of Embodiment 1.

### [Terminal count converter]

A terminal count converter 620 according to Embodiment 3 is configured such that the polarity of a first diode 604a and a second diode 605a exhibit a reverse polarity with respect to the polarity of the terminal count converter 600 according to Embodiment 1. The rest of the configuration is the same as the terminal count converter 600 according to Embodiment 1, and the terminal count converter 620 according to Embodiment 3 has a first terminal 601, a second terminal 602, a third terminal 603, a first diode 604a and a second diode 605a.

### [Operation]

AC current, which is supplied from an AC power supply, is applied between the two-terminals (first terminal 601 and second terminal 602), as drive current for the first LED group 501a and the second LED group 502a to emit light. If positive current is inputted from the first terminal 601, the positive current flows through the first LED group 501a, is consumed for lighting, and is then outputted from the second terminal 602 via the cathode common terminal 503a, the third terminal 603 and the second diode 605a. The negative current from the second terminal 602, on the other hand, flows through the second LED group 502a, is consumed for lighting, and is then outputted from the first terminal 601 via the cathode common terminal 503a, the third terminal 603 and the first diode 604. Since the LED device 510 according to Embodiment 3 as well has two terminals like this, the LED device 510 can be connected to the two feeder lines and be driven by the AC current.

Just like the LED light-emitting device 10 according to Embodiment 1, the spectrum of white light (emission wavelength region) emitted from the LED elements constituting the first LED group 501a may be different from that emitted from the LED elements constituting the second LED group 502a. Further, in the LED light-emitting device according to Embodiment 3 as well, brightness (amount of luminescence) of the white light emitted from the entire LED light-emitting device can be adjusted by adjusting the total of the average current values that are supplied to the first LED group 501a and the second LED group 502a in each of the positive or negative half cycle generated by the AC power supply. Furthermore, chromaticity of the white light emitted from the entire LED light-emitting device can be adjusted by changing the ratio of the average current to be supplied to the first LED group 501a and to the second LED group 502a.

### [Effect]

According to the LED light-emitting device of Embodiment 3 described above, the three-terminal LED device 510 can be operated as a two-terminal LED device. As a result, even if two conventional feeder lines are provided, as in the case of installing the LED illumination apparatus replacing the conventional illumination apparatus, the LED illumination apparatus including the LED light-emitting device according to Embodiment 3 can be installed without construction to add one more feeder line. Furthermore, the LED light-emitting device according to Embodiment 3 can be driven by AC current, and can easily adjust brightness (amount of luminescence) and chromaticity by changing the respective current that flows through the first LED group 501a and the second LED group 502a.

### <Embodiment 4>

### [Configuration]

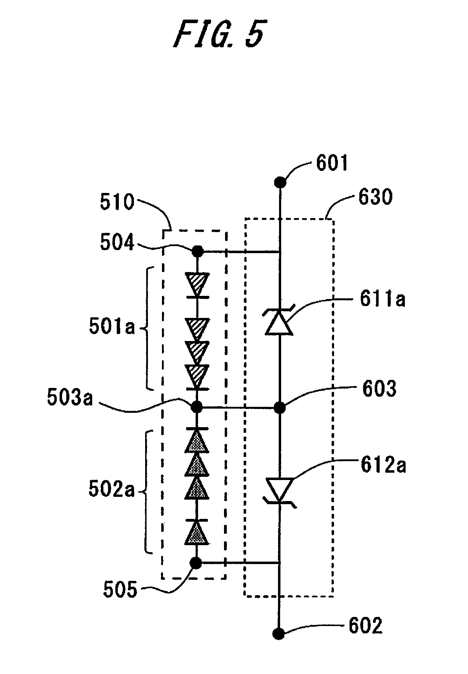

FIG. 5 shows an LED light-emitting device according to Embodiment 4. The LED light-emitting device according to Embodiment 4 has a function similar to the LED light-emitting device according to Embodiment 2. In other words, the LED light-emitting device according to Embodiment 4 certainly prevents damage to the LED device 510 due to overvoltage of the first LED group 501a and the second LED group 502a when overvoltage is applied from the first terminal 601 and the second terminal 602. The three-terminal LED device 510 according to Embodiment 4 is the same as the three-terminal LED device 510 according to Embodiment 3. In the LED light-emitting device according to Embodiment 4, a first Zener diode 611a and a second Zener diode 612a are used instead of the first diode 604a and the second diode 605a of the LED light-emitting device according to Embodiment 3 respectively. A composing element the same as the above described embodiments is denoted with a same reference numeral, for which detailed description is omitted.

### [Operation]

AC current, which is supplied from an AC power supply, is applied between the two terminals (first terminal 601 and second terminal 602), as drive current for the first LED group 501a and the second LED group 502a to emit light. If positive current is inputted from the first terminal 601, the current flows through the first LED group 501a, is consumed for lighting, and is then outputted from the second terminal 602 via the cathode common terminal 503a, the third terminal 603 and the second Zener diode 612. Even if overvoltage is generated between the first terminal 601 and the second terminal 602, damage to the LED device 510 can be prevented by the first Zener diode 611a breaking down first. The negative current from the second terminal 602, on the other hand, flows through the second LED group 502a, is consumed for lighting, and is then outputted from the first terminal 601 via the cathode common terminal 503a, the third terminal 603 and the first Zener diode 611a. Even if overvoltage is generated between the second terminal 602 and the first terminal 601, damage to the LED device 510 can be prevented by the second diode 612a breaking down first. Since the LED device 510 according to Embodiment 4 has two-terminals like this, the LED device 510 can be driven by the AC current using conventional two feed lines.

Just like the LED light-emitting device 10 according to Embodiment 1, the spectrum of white light (emission wavelength region) emitted from the LED elements constituting the first LED group 501a may be different from that emitted from the LED elements constituting the second LED group 502a. Further, in the LED light-emitting device according to Embodiment 4 as well, brightness (amount of luminescence) of the white light emitted from the entire LED light-emitting device can be adjusted by adjusting the total of the average current values that are supplied to the first LED group 501a and the second LED group 502a in each of the positive or negative half cycle generated by the AC power supply. Furthermore, chromaticity of the white light emitted from the entire LED light-emitting device can be adjusted by changing the ratio of the average current to be supplied to the first LED group 501a and to the second LED group 502a.

### [Effect]

According to the LED light-emitting device of Embodiment 4 described above, the three-terminal LED device 510 can be operated as a two-terminal LED device. As a result, even if two conventional feeder lines are provided, as in the case of installing the LED illumination apparatus replacing the conventional illumination apparatus, the LED illumination apparatus, including the LED light-emitting device according to Embodiment 4, can be installed without construction to add one more feeder line. Furthermore, the LED light-emitting device according to Embodiment 4 can be driven by AC current, and can easily perform toning by changing the current ratio between the current that flows through the first LED group 501a and the current that flows through the second LED group 502a. Also the brightness (amount of luminescence) can be changed while maintaining the chromaticity by adjusting the current to be supplied to each LED group in a state where the current ratio is maintained. Further, the first LED group 501a and the second LED group 502a, in other words the LED light-emitting device can be protected with more certainty by the first Zener diode 611a or the second Zener diode 612a actively experiencing a breakdown phenomena when overcurrent is generated.

### <Embodiment 5>

### [Configuration]

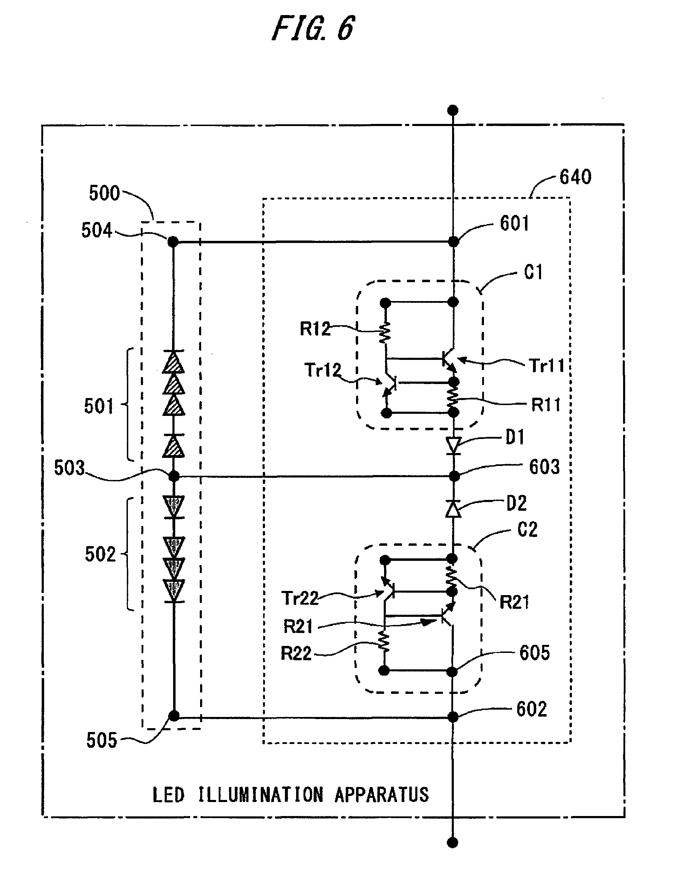

FIG. 6 shows an LED light-emitting device according to Embodiment 5. The LED light-emitting device according to Embodiment 5 further includes a constant current circuit C1 and a constant current circuit C2 that are connected in series to the first diode 604 and the second diode 605 of the LED light-emitting device 10 according to Embodiment 1 respectively.

The first constant current circuit C1 limits current to the second LED group 502 so that the value of the current supplied to the second LED groups 502 is maintained to be constant. The second constant current circuit C2 limits current to the first LED group 501 so that the value of current supplied to the first LED group 501 is maintained to be constant. As FIG. 6 shows, the first constant current circuit C1 and the second constant current circuit C2 are connected in series to exhibit reverse polarity with respect to each other. The reference symbols D1 and D2 in FIG. 6 denote diodes.

The first constant current circuit C1 includes two transistors Tr11 and Tr12 and two resistors R11 and R12. If AC current is supplied from an AC power supply to the LED light-emitting device and positive current is inputted to the first terminal 601, for example, forward bias is applied to the diode D1 and reverse bias is applied to the diode D2. As a result, the AC current flows through the first constant current circuit C1, but does not flow to the second constant current circuit C2.

If collector current in the transistor Tr11 increases at this time, the potential of the resistor R11 connected to the emitter side of the transistor Tr11 increases, and the transistor Tr12 turns ON. Thereby the base current in the transistor Tr11 decreases, and as a result, the collector current in the transistor Tr11 decreases. If the collector current in the transistor Tr11 decreases, on the other hand, reverse operation occurs, therefore the collector current in the transistor Tr11 is maintained to be constant, and a negative feedback operation is implemented.

If negative current from the second terminal 602 is inputted, on the other hand, forward bias is applied to the diode D2, and reverse bias is applied to the diode D1. As a result, the AC current flows through the second constant current circuit C2, but does not flow to the first constant current C1. The second constant current circuit C2 has a same configuration as the first constant current circuit C1, and includes two transistors Tr21 and Tr22 and two resistors R21 and R22.

If collector current in the transistor Tr21 increases when positive current is inputted from the second terminal 602, the voltage of the resistor R21 connected to the emitter side of the transistor Tr21 increases, and the transistor Tr22 turns ON. Thereby the base current in the transistor Tr21 decreases, and as a result, the collector current in the transistor Tr21 decreases. If the collector current in the transistor Tr21 decreases, on the other hand, reverse operation occurs. Therefore the collector current in the transistor Tr21 is maintained to be constant because a negative feedback operation is implemented. The above mentioned constant current operation is based on the fact that the base-emitter voltage of Tr21 and Tr22 is constantly maintained at 0.7 V in the npn type silicon transistors, regardless the temperature. Field effect transistors (FETs) may be used instead of the individual transistors mentioned above.

The path where negative or positive flows in the LED device is the same as Embodiment 1. Just like the LED light-emitting device 10 according to Embodiment 1, the spectrum of white light (emission wavelength region) emitted from the LED elements constituting the first LED group 501 may be different from that emitted from the LED elements constituting the second LED group 502. Further, in the LED light-emitting device according to Embodiment 5 as well, brightness (amount of luminescence) of white light emitted from the entire LED light-emitting device can be adjusted by adjusting the total of the average current values that are supplied to the first LED group 501 and the second LED group 502 in each of the positive or negative half cycle generated by the AC power supply. Furthermore, chromaticity of the white light emitted from the entire LED light-emitting device can be adjusted by changing the ratio of the average current to be supplied to the first LED group 501 and the average current to the second LED group 502.

### [Effect]

According to the LED light-emitting device of Embodiment 5 described above, the three-terminal LED device 500 can be operated as a two-terminal LED device. As a result, even if two conventional feeder lines are provided, as in the case of installing the LED illumination apparatus replacing the conventional illumination apparatus, the LED illumination apparatus including the LED light-emitting device according to Embodiment 5, can be installed without construction to add one more feeder line. Furthermore, the LED light-emitting device according to Embodiment 5 can be driven by AC current, and can easily perform toning by changing the current that flows through the first LED group 501 and the second LED group 502. Also the LED light-emitting device according to Embodiment 5 includes the first constant current circuit C1 and the second constant current circuit C2 for supplying constant current respectively to the first LED group 501 and the second LED group 502, therefore dispersion of the emission state of the first LED group 501 and the second LED group 502 can be prevented, and a stable emission state can be implemented.

### [Embodiment 6]

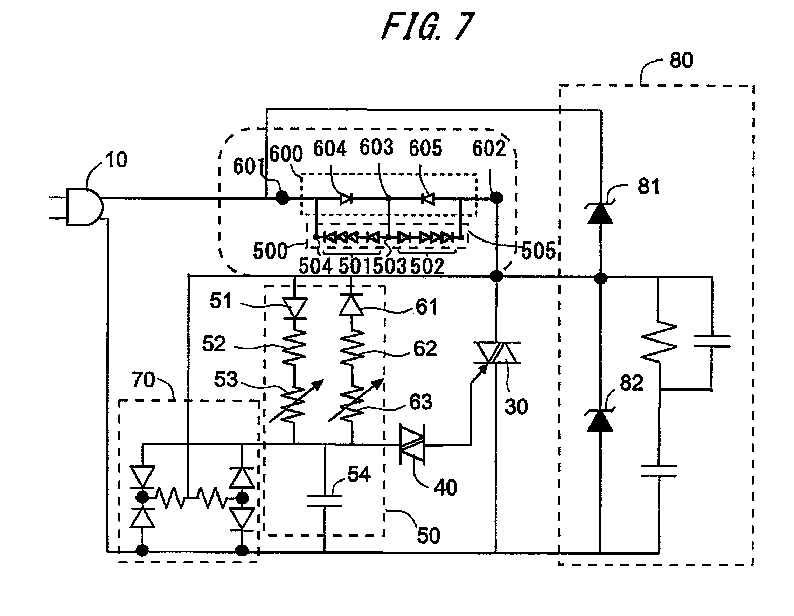

In Embodiment 6, a case of applying the LED light-emitting device 10 (LED device 500 and terminal count converter 600) according to Embodiment 1 to a white LED dimmer (white toning device) will be described. FIG. 7 shows a circuit configuration example of a white LED dimmer (white toning device) according to Embodiment 6. In FIG. 7, the LED dimmer circuit adjusts the hue of the white illumination light acquired by emission of the LED device 500. The LED light-emitting device according to any one of the second to fifth embodiments described above can also be appropriately applied to the white LED dimmer of the present embodiment.

Here the LED device 500 is a light-emitting diode group fabricated onto a sapphire substrate, and is constituted by a first LED group 501 and a second LED group 502. According to Embodiment 6, circuits are connected such that positive drive current is supplied to the first LED group 501 in a positive half cycle generated by AC, while negative drive current is supplied to the second LED group 502 in a negative half cycle generated by AC.

Each of the LED elements included in the first LED group 501 has a 410 nm emission wavelength and a 3.5 V terminal voltage (in the case of forward current), and generates a maximum quantity of light with 70 V DC if 20 LED elements are connected in series.

In each LED element of the first LED group 501, a fluorescent substance, that emits about 3000K white light if stimulated (excited) by light having a 410 nm emission wavelength, is embedded, and each LED element turns ON in one of the positive and negative half cycles generated by AC.

Whereas in each LED element constituting the second LED group 502, a fluorescent substance, that emits about 5000K white light if stimulated (excited) by light having a 410 nm emission wavelength, is embedded, and each LED element turns ON in the other positive or negative half cycle of AC.

The number of LED elements constituting each LED group can be changed as deemed appropriate, and this number may be one. The white light emitted by the first LED group 501 and the white light emitted by the second LED group 502 must be different from each other, but chromaticity (emission wavelength region) can be selected as deemed appropriate.

The terminal count converter 600 allows the three-terminal LED device 500 to operate as a two-terminal LED device.

The dimmer circuit includes an AC power supply input terminal 1, a triac 30, a trigger diode 40, a time constant circuit 50, a hysteresis removal circuit 70 and a protection circuit 80.

The AC power supply input terminal 1 is a terminal for supplying power from a commercial power supply (AC 100 V) into the dimmer circuit, and includes a plug to be connected to the commercial power supply. One end of the input terminal 1 is connected to the first terminal 601 of the terminal count converter 600.

The triac 30 is connected to the second terminal 602 of the LED device 500, and conducts AC current inputted from the AC power input terminal 1 in the ON period in one cycle of AC to the first LED group and the second LED group 502. If power is turned ON (triggered) at a certain point of a half cycle, the triac 30 continues supplying positive or negative current to the second terminal 602 until this half cycle ends.

The trigger diode 40 supplies a trigger signal to the triac 30 so that the triac 30 is triggered.

The time constant circuit 50 controls the timing for the trigger diode 40 to supply a trigger signal to the triac 30. The time constant circuit 50 has a diode 51, a resistor 52 and a variable resistor 53, which are connected in series, and a diode 61, a resistor 62, a variable resistor 63 and a capacitor 54 which are connected in series, and are connected to the trigger diode 40. Each variable resistor 53 and 63 includes an operation unit (e.g. button) for individually adjusting these resistors.

The resistor 52, the variable resistor 53 and the capacitor 54 constitute a CR time constant circuit, which charges the applied voltage to the trigger diode 40 in a positive half cycle (first half of a cycle) generated by AC, to turn the trigger diode 40 ON according to the time constant determined by the resistance values and the capacitance value. The diode 51 is a diode for back flow prevention. The resistor 62, the variable resistor 63 and the capacitor 54, on the other hand, constitute a CR time constant circuit which charges the applied voltage to the trigger diode 40 in a negative half cycle (latter half of a cycle) generated by AC, to turn the trigger diode 40 ON according to the time constant determined by the resistance values and the capacitance value.

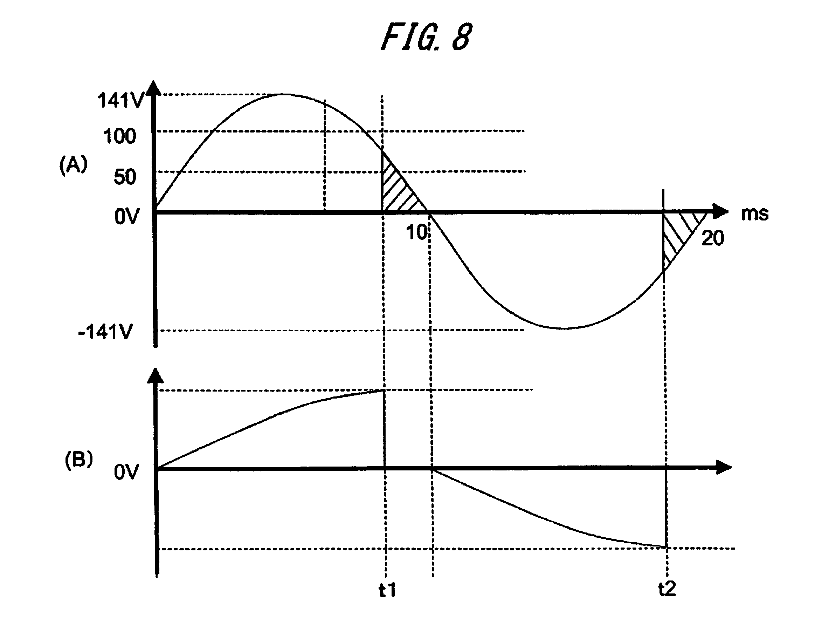

FIG. 8A shows a commercial power supply waveform that is applied to the dimmer circuit, and FIG. 8B shows voltage applied to the trigger diode 40 (indicating how electric charges are changed in the capacitor 54). FIG. 8A shows a sine-curved AC voltage applied to the dimmer circuit. In the positive half cycle, a positive charge starts to the capacitor 54 of the time constant circuit 50 as soon as voltage starts to be applied, and at time t1, when a predetermined amount of electric charges are charged in the capacitor 54, the trigger diode 40 supplies a trigger signal to the triac 30, the triac 30 is triggered, and starts supplying a positive current to the LED device 500. The current is constantly supplied until the end of the half cycle. In the negative half cycle, a similar operation is performed with reversed polarity with respect to the positive half cycle, and at time t2, the triac 30 is triggered, and negative current is supplied to the LED device 500.

In this way, in each of the positive or negative half cycle, the triac 30 is triggered at a timing according to the time constant of the time constant circuit 50, and supplies the drive current to the LED device 500. The shaded portions in FIG. 8A show the voltage (current) supplied to the LED device 500 in the positive and negative half cycles. The time constant changes depending on the resistance values of the variable resistors 53 and 63. For example, as the resistance value of the variable resistor 53 decreases, the time constant decreases, and the timing when the triac 30 is triggered quickens. Thus by changing the resistance values of the variable resistors 53 and 63, the ON time, that is the current value of the first LED group 501 and the second LED group 502 in the half cycle, can be changed. The resistance values of the variable resistors 53 and 63 can be individually controlled. In the dimmer circuit according to Embodiment 6, the ON time in each positive or negative half cycle can be individually controlled (adjusted).

The hysteresis removal circuit 70 is a circuit to remove the residual electric charges in the capacitor 54 charged by the end of the positive or negative half cycle generated by AC, so as to remove hysteresis.

The protection circuit 80 is connected in parallel with the LED device 500 and the triac 30, and one end of the protection circuit 80 is connected to the first terminal 601, and the other end thereof is grounded. The protection circuit 80 has Zener diodes 81 and 82, which break down when an impulse or surge is generated, so as to protect the LED light-emitting diode 10 (LED device 500).

An operation example (control example) of the dimmer circuit will be described next. First the operation units of the variable resistors 53 and 63 are operated to set the resistance values of these resistors to the maximum values. The AC input terminal 1 is connected to the commercial power supply 100 V (not illustrated). In this state, the AC voltage (AC current) can be supplied to the dimmer circuit.

Then the current indicated by the shaded portion in FIG. 8A flows to the LED device 500 (load). Thereby each of the first LED group 501 and the second LED group 502 intermittently emits light in the latter half portion of each half cycle, which, to human eyes look as if each LED group is being weakly lit.

If the resistance value is then decreased by operating the operation unit of the variable resistor 53, the triggering timing of the triac 30 is quickened, and the average current value in the positive half cycle generated by AC increases, which, to human eyes look as if the LED device is being lit slightly more brightly.

If the resistance value is then decreased by operating the operation unit of the variable resistor 63, the average current value in the negative half cycle of AC increases, which, to human eyes look as if the LED device is being lit more brightly. In this case, emission of 3000K white light irradiated from the first LED group 501 takes a major ratio of the entire light quantity of the LED device 500, hence the LED device 500 looks not only brighter than the lighting of only the first LED group 501, but also looks like it has a higher chromaticity.

As described above, according to Embodiment 6, the first LED group 501 and the second LED group 502, which have different chromaticity from each other, can be controlled individually using individual variable resistors 53 and 63 corresponding to each half cycle generated by AC, hence the chromaticity of light emitted from the LED device 500 can be adjusted to an arbitrary chromaticity in the 3000K to 5000K range.

### <Embodiment 7>

Embodiment 7 will be described next. Here is an example where a mode of installing the LED light-emitting device described in Embodiment 1 in an LED illumination system LS will be described in detail. The above described LED light-emitting devices according to Embodiments 2 to 5 can also be appropriately applied to the LED illumination system LS according to this embodiment.

The LED illumination system LS according to Embodiment 7 will now be described. To this LED illumination system LS, a pair of feeder lines from the power supply is connected to the dimmer Dm, and the dimmer Dm and the LED light-emitting device 10 are connected via the pair of feeder lines (drive current supply lines). The illumination system LS, according to this embodiment, can be suitably applied to a building where a pair of lead-in wires is led from a power supply (commercial power supply) to an installation position of the dimmer Dm, and a pair of feeder lines have been laid between the installation position of the dimmer Dm and the installation position of the LED light-emitting device 10. In this case, power can be supplied to the LED light-emitting device 10 which is adjusted by the control circuit included in the dimmer Dm.

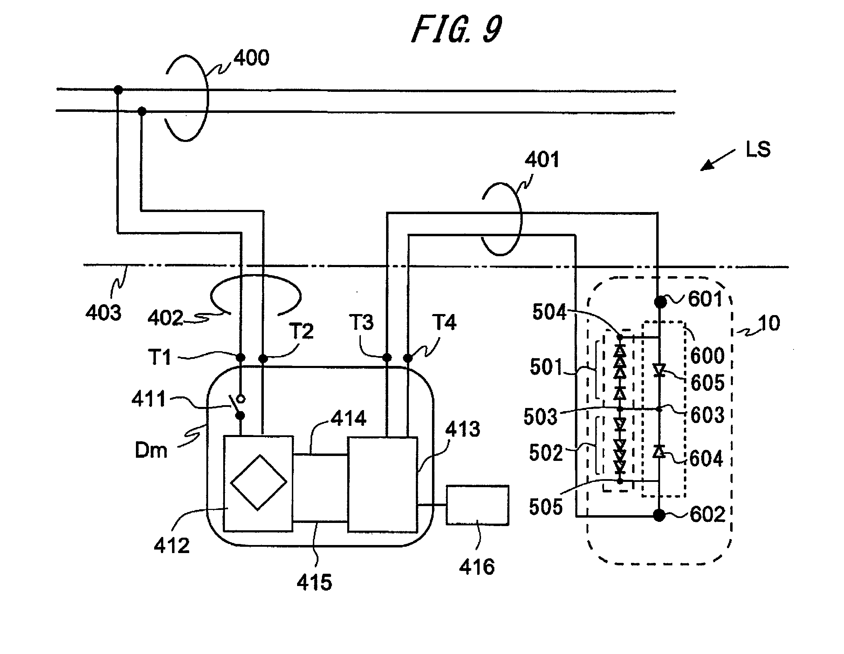

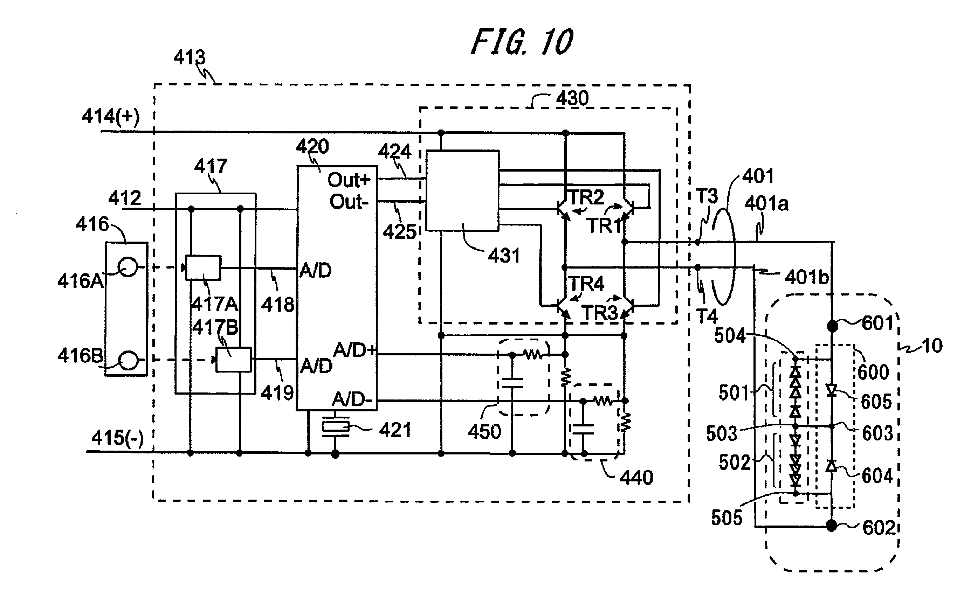

FIG. 9 shows a general circuit configuration of an LED illumination system according to Embodiment 7, and FIG. 10 shows a configuration example of a control circuit shown in FIG. 9. FIG. 9 shows, with a virtual line 403 indicated by the two-dot chain line as a boundary, an electric wiring installation space (above the virtual line 403) and an installation space for the LED illumination system LS (below the virtual line 403) where the dimmer Dm (dimmer box), to which the electric wiring is connected, and the LED light-emitting device 10 are installed.

An electric wiring installation space is normally in a wall or in a space between a ceiling and a roof, and is isolated from the installation space of the LED illumination system LS by the wall or the ceiling. In the case of the example in FIG. 9, a pair of commercial power supply buses 400 to which commercial power (e.g. AC 100 V, 50Hz) is supplied, a pair of feeder lines 401 (401a, 401b) for the illumination apparatus, and a pair of lead-in wires 402 for switching the illumination apparatus ON/OFF, which are led from the commercial power supply buses 400, are wired in the electric wiring installation space.

The lead-in wires 402 are connected with a pair of terminals T1 and T2 at the input side of the dimmer Dm. The dimmer Dm has a pair of terminals T3 and T4 at the output side, and the terminals T3 and T4 are connected with the feeder lines 401 (401a, 401b) for the illumination apparatus. An LED light-emitting device 10 having a pair of terminals (first terminal 601 and second terminal 602) is connected to the feeder lines 401 for the illumination apparatus. The LED light-emitting device 10 is the same as the LED light-emitting device 10 described in Embodiment 1.

The dimmer Dm receives AC voltage from the commercial power supplied from the terminals T1 and T2. The dimmer Dm has a full-wave rectification type DC power supply circuit (hereafter called "power supply circuit") 412. By this power supply circuit 412, the dimmer Dm can provide stable DC power regardless the conduction state of the load. The power supply circuit 412 is connected to the control circuit 413 via DC power supply lines 414 and 415. If the effective value of the commercial AC power supply is 100 V, the power supply circuit 412 becomes a DC power supply which supplies approximately 140 V of DC voltage (under no load conditions) via the feeder lines 414 and 415.

As FIG. 10 shows, the control circuit 413 has a control input detection unit 417, a control device 420 and a drive device 430, which are connected to the operation unit 416. The drive device 430 includes a drive logic circuit (control circuit) 431 and a drive circuit 432, which is an H type bridge circuit. The output terminal of the drive circuit 432 is connected to the terminals T3 and T4, and is connected to the LED light-emitting device 10 via the feeder lines 401 for the illumination apparatus. The LED light-emitting device 10 is, as described in Embodiment 1, comprised of a three-terminal LED device 500 and a three-terminal terminal count converter 600. The terminal count converter 600 allows the three-terminal LED device 500 to operate as a two-terminal LED device. The LED device 500 is comprised of LED elements constituting the first LED group, LED elements constituting the second LED group, of which emission wavelength regions are mutually different, and an anode common terminal 503. The terminal count converter 600 is comprised of a first terminal 601, a second terminal 602, a third terminal 603, a first diode 604 and a second diode 605.

The operation unit 416 is an operation device to adjust (dim) the quantity of light emitted by the LED light-emitting device 10, and adjust (tone) the hue (chromaticity) thereof. In concrete terms, the operation unit 416 includes an operation dial 416A for dimming and an operation dial 416B for toning. The user can adjust the amount of luminescence and emitted color (hue) of the LED light-emitting device 10 by rotating each dial 416A and 416B.

The control input detection unit 417 is a signal generator that outputs a signal according to the rotation amount (rotation angle) which is a control input of each operation dial 416A and 416B. In this embodiment, the control input detection unit 417 includes a variable resistor 417A of which resistance value changes according to the rotation amount (rotation angle) of the operation dial 416A, and a variable resistor 417B of which resistance value changes according to the rotation amount (rotation angle) of the operation dial 416B. The control input detection unit 417 is connected with the power supply circuit 412 via the wiring 405. A predetermined DC voltage (e.g. maximum 5 V under no load conditions), which the power supply circuit 412 generates from a commercial AC power supply, is applied to the control input detection unit 417 via the wiring 405.

A voltage (e.g. maximum 5 V) according to the resistance value of the variable resistor 417A is generated in the wiring (signal line) 418 connecting the control input detection unit 417 and the control device 420. And a voltage (e.g. maximum 5 V) according to the resistance of the variable resistor 417B is generated in the wiring (signal line) 419 connecting the control input detection unit 417 and the control device 420. In this way, the control input detection unit 417 generates signal voltage according to each control input of the operation dials 416A and 416B.

A slide bar can be used instead of the operation dial 416A or 416B. If a slide bar is used, the control input detection unit 417 generates voltage (signal) according to the moving distance instead of the rotation amount. The control input detection unit 417 outputs voltage according to a variable resistance value as a control signal. However a rotary encoder to detect the rotation amount (rotation angle) of the operation dial 416A or 416B may be installed, and a pulse to indicate the rotation amount of the rotary encoder may be inputted to the control device 420, instead of the voltage. In this case, it is unnecessary to install the analog/digital converter to convert voltage into a digital value.

The control device 420 is a control circuit integrating an analog/digital converter (A/D converter), a microcomputer (MP), a register, a timer and a counter. For the microcomputer, a built-in memory type microprocessor, in which a master clock operates at an operation frequency (e.g. 4 MHz) from a crystal operator (not illustrated), can be applied. The present invention, however, is not limited to this. The microcomputer loads the operation program recorded in an internal read only memory (ROM), which is not illustrated, into a random access memory (RAM), which is not illustrated, and executes processing according to the program.

The A/D converter of the control device 420 outputs a digital value of voltage generated in the signal line 418, and this digital value is set in a register, which is not illustrated. The A/D converter also outputs a digital value of voltage generated in the signal line 419, and this digital value is set in a register, which is not illustrated. The timer and the counter of the control device 420 is driven by a ceramic oscillator 421 that oscillates at a desired self-oscillation frequency (e.g. 1 MHz), and self-outputs a complementary pulse at a preset timing from the wirings 424 and 425 connecting the control device 420 and the drive logic circuit 431. This complementary pulse is set in advance such that the repeat frequency becomes a predetermined frequency.

The microcomputer of the control device 420 performs control pulse generation processing to generate a control pulse (control signal) according to the digital value (control input of the operation dial 416A and 416B) that is set in each register, and supplies (outputs) the generated pulse to the drive logic circuit 431. The pulse (control signal) generated by the microcomputer is supplied to the drive logic circuit 431 via the wirings 424 and 425.

The drive logic circuit 431, which received the supply of a pulse (control signal) from the wirings 424 and 425, controls the ON/OFF operation (switching operation) of the transistors (switching elements) TR1 to TR4 according to the control signal. In other words, if no pulse is inputted from the wirings 424 and 425, the control circuit 431 turns the transistors TR1 to TR4 OFF. While a positive pulse is inputted from the wiring 424, the control circuit 431 turns the transistors TR1 and TR4 ON, and turns the transistors TR2 and TR3 OFF. Thereby DC current, which is supplied from the power supply circuit 412 via the wiring 414, flows into the feeder line 401a through the transistor TR1, and is consumed for lighting the second LED group 502. Then the current flows to the wiring 415 (grounded) via the feeder line 401b and the transistor TR4.

On the other hand, while a negative pulse is inputted from the wiring 425, the drive logic circuit 431 turns the transistors TR2 and TR3 ON, and turns the transistors TR1 and TR4 OFF. Thereby DC current, which is supplied from the power supply circuit 412 via the wiring 414, flows into the wiring 401b through the transistor TR2, and is consumed for lighting the first LED group 501. Then the current flows to the wiring 415 (grounded) via the wiring 401a and the transistor TR3.

Therefore the positive drive current and the negative drive current, having a similar form as the pulse (control signal) that is outputted from the control device 420, are alternately supplied to the LED light-emitting device 10. In other words, AC current having different polarity is supplied to the first LED group 501 and the second LED group 502 respectively as drive current.

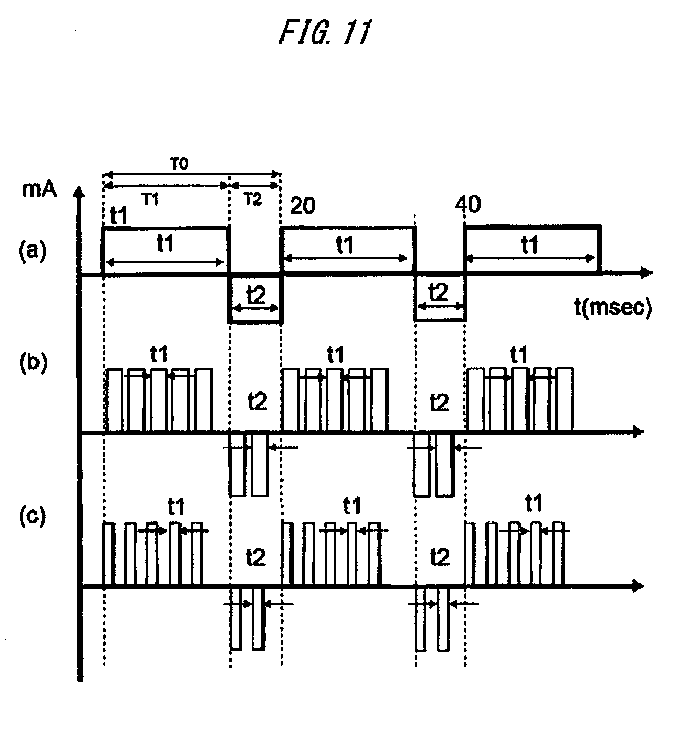

FIG. 11 shows diagrams depicting the waveforms of drive current that is supplied to the LED light-emitting device when brightness (amount of luminescence) is adjusted. In this embodiment, in one cycle (period T0), the drive device 430 outputs a positive pulse in a period T1 for supplying a positive control signal, and outputs a negative pulse in a period T2 for supplying a negative control signal. If the operation dial 416A for dimming is operated, the microcomputer in the control device 420 performs pulse width modulation (PWM) to adjust the duty ratio.

The average current that is supplied to the first LED group 501 and the second LED group 502 of the LED light-emitting device 10 depends on the ON time of the pulse. In other words, as the ON time of the negative or positive pulse increases, the average current value of the drive current that is supplied to each LED group 501 and 502 in one cycle increases. As the duty ratio decreases and the ON time of the pulse decreases, the average current value that is supplied to each LED group 501 and 502 of the LED light-emitting device 10 decreases.

FIG. 11A shows a pulse when the duty ratio is 1. In this case, one pulse is outputted in each of the positive and negative pulse supply periods T1 and T2. FIG. 11B shows a state when the duty ratio in the periods T1 and T2 is decreased from the state shown in FIG. 11A by PWM control of the microcomputer. By changing the duty ratio, a state of supplying a plurality of positive and negative pulses occurs. FIG. 11C shows a state when the duty ratio is further decreased from the state shown in FIG. 11B. In this case, the pulse width of each positive and negative pulse is even smaller than the state of FIG. 11B.

The examples shown in FIG. 11A to FIG. 11C are states when the operation dial 416A for dimming is operated to decrease the amount of luminescence of the LED light-emitting device 10 sequentially. If the operation dial 416A is operated like this, the ON time of the pulse decreases since the microcomputer of the control device 420 decreases the duty ratio by PWM control. As a result, the average current that is supplied to the first LED group 501 and the second LED group 502 of the LED light-emitting device 10 decreases, and the amount of luminescence outputted from the first LED group 501 and the second LED group 502 decreases. Here the ratio of the ON time of the pulse in one cycle (positive period T1 and negative period T2) does not change. Therefore brightness (amount of luminescence) can be adjusted without changing the hue (chromaticity) of the LED light emitting device 10.

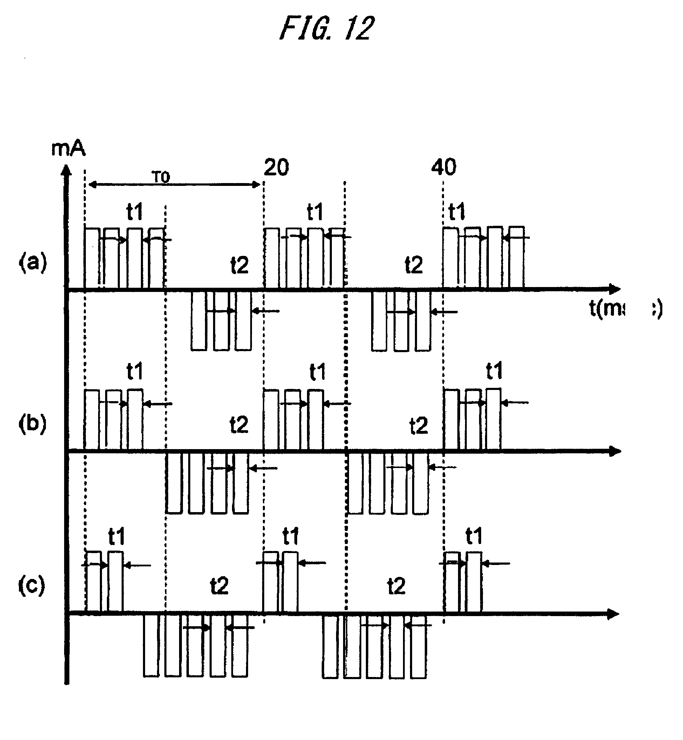

FIG. 12 shows diagrams depicting the waveforms of drive current that are supplied to the LED light-emitting device 10 when hue is adjusted. FIG. 12A to FIG. 12C show the states of the pulse when the operation dial 416B is operated. If the operation dial 416B is operated, the microcomputer of the control device 420 changes the number of positive and negative pulses in one cycle (period T0), without changing the pulse width. In FIG. 12A, a pulse width is the same in the positive and negative cycles, and the ratio of the ON time of the pulse in the positive cycle and the negative cycle is 4:3.

In FIG. 12B, the ratio of the ON time of the positive and the negative pulses in one cycle has been changed to 3:4. In FIG. 12C, the ratio of the ON time of the positive and the negative pulses in one cycle has been changed to 2:5. By changing the ratio of the ON time of the positive and the negative pulses in one period, the ratio of the ON time in the first LED group 501 and the second LED group 502 in one cycle changes. Thereby the chromaticity (hue) of combined light emitted by the first LED group 501 and the second LED group 502 is changed.

The repeat frequency T0 (self-oscillation frequency) for outputting the positive and the negative pulses can be determined between the 30 Hz to 50 kHz range, for example, considering sensitivity to human eyes, preventing switching loss and noise generation. 50 Hz to 400 Hz is preferable. 50 or 60 Hz to 120 Hz is even more preferable. The self-oscillation frequency can be determined independently from the commercial power supply frequency, but may be the same frequency as the commercial power supply frequency.

As FIG. 10 shows, integration circuits 450 and 440 are installed in the control circuit 413 according to Embodiment 7. The integration circuit 450 feeds back voltage in proportion to the average value of the positive current for driving the second LED group 502 to the control device 420, and the integration circuit 440 feeds back the voltage in proportion to the average value of the negative current for driving the first LED group 501 to the control device 420. The control device 420 observes the feedback voltage of the integration circuits 440 and 450 using the A/D converter for generating the control signal (pulse).

An operation example of the dimmer Dm will now be described. If the main power supply switch 411 (see FIG. 9) is closed, the rectification and voltage conversion operations are performed by the power supply circuit 412, and DC power is supplied to the control circuit 413. The microcomputer of the control device 420 starts an initialization operation by a known method, and loads an operation program recorded in the internal read only memory (ROM), which is not illustrated, into the random access memory (RAM), which is not illustrated, and performs processing according to the program.

To adjust the brightness (amount of luminescence) of the LED light-emitting device 10, the following operation is performed, for example, and the dimmer 410 operates as follows. For example, if the user turns the operation dial (operation button) 416A to the right limit to set the brightness (amount of luminescence) of the illumination to the maximum, a maximum of 5.0 V of DC voltage is generated in the signal line 418. The control device 420 converts the voltage generated in the signal line 418 into a digital signal by the internal A/D converter, and supplies the control signal to the drive logic circuit 431 of the drive circuit 430 via the signal lines 424 and 425. The drive logic circuit 431 drives the drive circuit (H type bridge) 432 according to the control signal. At this time, the drive circuit 432 is driven at 50 Hz, that is, at a self-oscillating frequency which is set in advance.

The control signal waveform in this case is as shown in FIG. 11A, and during time t1 when the positive pulse (control signal) is ON, positive current flows through the feeder line 401a and turns the second LED group 502 in the LED light-emitting device 10 ON. During time t2 when the negative pulse (control signal) is ON, on the other hand, negative current flows through the feeder line 401b, and turns the first LED group 501 in the LED light-emitting device 10 ON. Since approximately 50 Hz of AC current flows through the feeder line 401, the first LED group 501 and the second LED group 502 of the LED light emitting device 10 alternately turns ON.

Here the ratio of the current (individual current) that flows during time t1 and the current (individual current) that flows during time t2 controls the chromaticity of the combined light emitted from the first LED group 501 and the second LED group 502 of the LED light-emitting device 10. In the state shown in FIG. 11A, the ON time of the second LED group 502 of which chromaticity is higher is longer than the ON time of the first LED group 501, hence the color of the emitted light of the LED light-emitting device 10 is slightly bluish- white.

If the user turns the operation dial (dimmer button) 416A to the left and sets the brightness (amount of luminescence) of the illumination to mid-level, approximately 2.5 V of DC voltage is generated in the signal line 418. In this case, the microcomputer of the control device 420 converts the voltage into a digital signal by the internal A/D converter, controls the driving of the drive device 430, and supplies AC current to the LED illumination apparatus 20. In this case, the pulse waveform becomes a state shown in FIG. 11B. In other words, the ratio of the ON time of the positive pulse in the period T1 and the ON time of the negative pulse in the period T2 is not changed, but the duty ratio drops, so one pulse at the highest brightness (amount of luminescence) becomes a plurality of pulse groups. Here the pulse width of the positive pulse and the pulse width of the negative pulse are the same. Thereby the average current decreases compared with the time of maximum brightness (amount of luminescence), and as a result, the brightness (amount of luminescence) of the outputted light from the first LED group 501 and the second LED group 502 of the LED light-emitting device 10 drops.

Then the user further turns the operation dial (dimmer button) 416A to the left, and sets the brightness (amount of luminescence) of the illumination to the minimum value. Then approximately 0.5 V of DC voltage is generated in the signal line 418. In this case, the microcomputer of the control device 420 converts the voltage value into a digital value by the A/D converter, and controls the drive device 430 according to the voltage value. In other words, as FIG. 11C shows, the control device 420 further decreases the duty ratio of the positive and the negative pulses in the period T1 and the period T2. Thereby the ratio of the ON time of a positive pulse in the period T1 and the ON time of the negative pulse in the period T2 is not changed, and the pulse width of each pulse further decreases. Average current further decreases compared with the case of mid-level brightness (amount of luminescence), therefore the output light from the first LED group 501 and the second LED group 502 of the LED light-emitting device 10 both have the lowest brightness (amount of luminescence).

An example of the operation performed by the user and an operation of the dimmer Dm when chromaticity (hue) of the LED light-emitting device 10 is adjusted will be described next. As mentioned above, the current waveform shown in FIG. 11B exhibits a slightly bluish-white, since average current of the second LED group 502 is higher than the average current of the first LED group 501. Here a case of the user changing the light to a slightly reddish-white at a lower kelvin temperature, from a state when the current waveform shown in FIG. 11B is being supplied to the LED light-emitting device 10, will be described. In this case, the user turns the operation dial (toning button) 416B to the left (counterclockwise). Then the DC voltage (e.g. about 4 V) generated in the signal line 419 drops to about 3.0 V, for example.

The microcomputer of the control device 420 reads a digital value of the DC voltage of the signal line 419 converted by the A/D converter, and changes the pulse waveform for controlling the drive device 430. For example, the microcomputer of the control device 420 changes the pulse waveform that is supplied to the drive logic circuit 431 of the drive device 430 from the state shown in FIG. 11B to the state shown in FIG. 12A. In other words, the microcomputer changes the ratio of the ON time of the positive current (pulse) and the negative current (pulse), which is 5:2 in the state shown in FIG. 11B, to 4:3 as shown in FIG. 12A. Thereby the average current to be supplied to the second LED group 502 decreases, and the average current to be supplied to the first LED group 501 increases. As a result, the color of the emitted light of the LED light-emitting device 10, that is the chromaticity, slightly drops, and exhibits a reddish-white color. At this time, the ratio of the ON time of the pulse in the positive or the negative cycle changes, but the total value of the pulse (total value of the average current) in each of the positive and the negative cycles does not change, so the brightness (amount of luminescence) of the LED light-emitting device 10 does not change.

Then in order to change the light to reddish-white at lowest chromaticity, the user turns the operation dial (chromaticity button) 416B to the left (counterclockwise) to the limit. Then the DC voltage of the signal line 419, which was about 3.0 V, drops to about 1.0 V. If the DC voltage of the signal line 419 converted into a digital value is detected, the microcomputer of the control device 420 changes a control signal (pulse) to drive a full bridge driver 250 via the drive logic circuit 220. In other words, the microcomputer provides a control signal to the drive device 430 so that the waveform of the current that flows through the feeder line 401a changes in the sequence of FIG. 12A, FIG. 12B and FIG. 12C. Thereby the average current of the second LED element group 502 further decreases, and the average current of the first LED group 501 further increases. As a result, the chromaticity of the LED light-emitting device 10 further drops, and a strong reddish-white light is exhibited. At this time as well, the general brightness (amount of luminescence) of the LED light-emitting device 10 does not change.

As described above, according to the LED illumination system LS of this embodiment, AC from the AC power supply, such as commercial power supply, is converted into DC, AC at a desired frequency (positive or negative current supplied in each period T0) is generated from DC by a self-oscillating frequency, and is supplied to each of the first LED group 501 and the second LED group 502 in the LED light-emitting device 10 as drive current. Thereby design flexibility for the dimmer Dm can be increased. Furthermore according to the LED illumination system LS of this embodiment, the brightness (amount of luminescence) (luminosity) can be adjusted without changing hue (chromaticity) of the combined light that is outputted from the LED light-emitting device 10, and hue (chromaticity) can be adjusted without changing the brightness (amount of luminescence) (luminosity).

### <Embodiment 8>

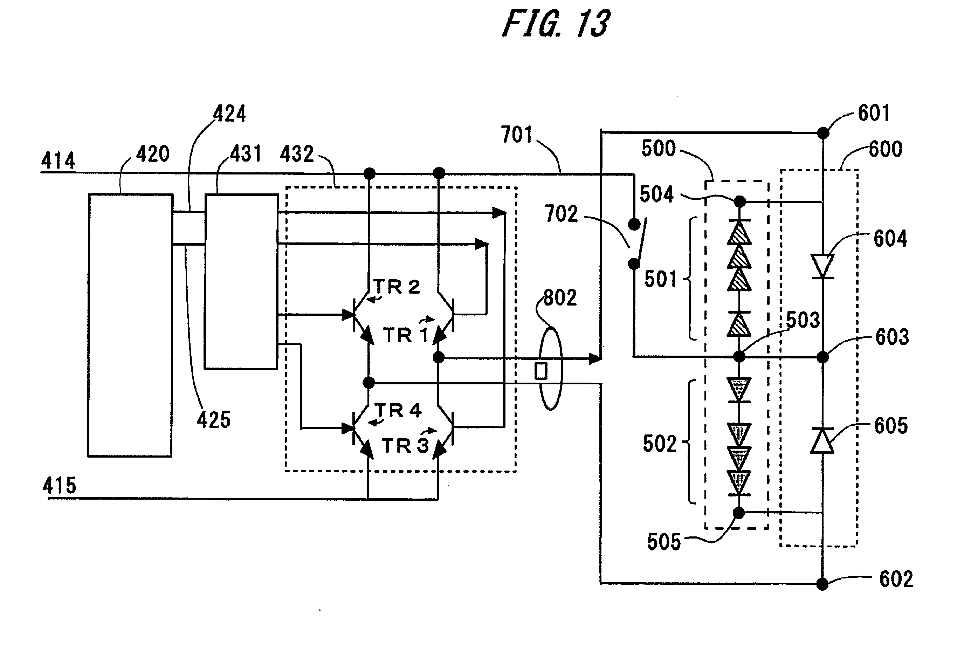

In Embodiment 8, a case of applying the LED light-emitting device 10 according to Embodiment 1 to a full lighting type LED illumination apparatus will be described. Here a case of the LED illumination system described in Embodiment 7 functioning as the full lighting type LED illumination apparatus will be described. FIG. 13 shows a general configuration of the full lighting type LED illumination apparatus that includes the LED light-emitting device according to Embodiment 8. The full lighting type LED illumination apparatus according to Embodiment 8 has a wiring 701 that is connected to the DC power supply line 414 and a switch circuit 702 installed to this wiring 701, in addition to the configuration of the LED illumination apparatus according to Embodiment 7.

The switch circuit 702 can be shorted to the DC power supply line 414 via the wiring 701. The switch circuit 702 can be operated by an operation button or the like, which is not illustrated. The microcomputer of the control device 420 performs control pulse generation processing for generating a control pulse (control signal) according to a digital value (control input of the operation dial 416A or 416B) that is set in each register, and supplies (outputs) the generated pulse to the drive logic circuit 431. The pulse (control signal) generated by the microcomputer is supplied to the drive logic circuit 431 via the wiring 424 or 425. According to Embodiment 8, the control device 420 has a normal mode where the LED illumination apparatus functions as a normal LED illumination apparatus, and a full lighting mode where the LED illumination apparatus functions as a full lighting type illumination apparatus. The control device 420 according to Embodiment 8 performs control pulse generation processing for generating a corresponding control signal when an operation button, for the normal mode or the full lighting mode, is selected, and outputs the generated pulse to the drive logic circuit 431. The normal mode includes a mode to turn the transistors TR1 to TR4 OFF if no pulse is inputted from the wiring 424 and 425, and a mode to turn the transistors TR1 and TR4 ON and turn the transistors TR2 and TR3 OFF while a positive pulse is being inputted from the wiring 424. In other words, the normal mode includes a mode to alternately turn the first LED group 501 and the second LED group 502 ON. Full lighting mode, on the other hand, includes a mode to turn the transistors TR3 and TR4 ON, and turns the transistor TR1 and TR2 OFF while a positive pulse is being inputted from the wiring 424. In other words, the full lighting mode includes a mode to simultaneously turn the first LED group 501 and the second LED group 502 ON.

The drive logic circuit 431 receives a pulse (control signal) supplied from the wirings 424 and 425, and controls the ON/OFF operation (switching operation) of the transistors (switching elements) TR1 to TR4 according to the control signal.

### [Operation]

According to the full lighting type LED illumination apparatus of Embodiment 8, the switch circuit 702 can be closed by switching the mode to the full lighting mode using an operation button or the like, as a special operation, whereby the first LED group 501 and the second LED group 502 can be simultaneously turned ON. In other words, if full lighting mode is selected, the control device 420 detects this, and switches the mode to the full lighting mode. In concrete terms, for example, a control signal to turn the transistors TR3 and TR4 ON and to turn the transistors TR1 and TR2 OFF is outputted to the drive logic circuit 431 while a positive pulse is being inputted from the wiring 424. The switch circuit 702 is closed if the operation button or the like is operated. The drive logic circuit 431 receives a pulse (control signal) supplied from the wirings 424 and 425, and controls the ON/OFF operation (switching operation) of the transistors (switching elements) TR1 to TR4 according to the control signal. In concrete terms, the drive logic circuit 431 turns the transistors TR3 and TR4 ON, and turns the transistors TR1 and TR2 OFF while a positive pulse is being inputted from the wiring 424. As a result, the transistors TR1 and TR12 are turned OFF, the transistors TR3 and TR4 are turned ON, the switch circuit 702 is closed, and the positive current is inputted to the anode common terminal 503 via the switch circuit 702. The positive current inputted to the anode common terminal 503 flows through both the first LED group 501 and the second LED group 502, and each LED group turns ON. The positive current that flows through the first LED group is outputted via the first terminal 601 and the transistor TR3. The positive current that flows through the second LED group 502 is outputted via the second terminal 602 and the transistor TR4. By this operation, the first LED group 501 and the second LED group 502 are simultaneously turned ON, and a special function to emit luminous flux, which is double the case of normal alternate light, is exhibited.

In Embodiment 8, the mode is switched to the full lighting mode by selecting the full lighting mode with an operation button, but the mode may be switched to the full lighting mode depending on the state of the switch circuit 702. For example, mode can be switched to full lighting mode by detecting the state of the switch circuit 702. In concrete terms, a photocoupler is disposed on the switch circuit 702, and if the switch circuit 702 is closed and current flows, the light emitting diode emits light, and this light turns the phototransistor ON. The mode of the control device 420 can be switched to the full lighting mode by flowing current into the control device 420.

### [Effect]

According to the full lighting type LED illumination apparatus of Embodiment 8 which has switch circuit 702, full lighting of the first LED group 501 and the second LED group 502 is made possible. In Embodiment 8, the switch circuit 702 is disposed on the LED light-emitting device 10 side. The position where the switch circuit 702 is disposed however is not limited, and may be disposed on the dimmer side, for example.

Although preferred embodiments of the present invention have been described, numerous modifications can be made for the embodiments without departing from the true spirit and scope of the invention. For example, the transistors shown in each drawing of each embodiment may be bipolar transistors or may be field effect transistors (FETs). The LED light emitting device, dimmer and LED illumination system according to the present invention are not limited to these embodiments, but may include combinations thereof.
While the invention has been described in detail and with reference to specific embodiments thereof, it will be apparent to one skilled in the art that various changes and modifications can be made therein without departing from the spirit and scope thereof.

### EXPLANATION OF REFERENCE NUMERALS

- 500: LED device
- 501, 501a: first LED group
- 502, 502a: second LED group
- 503: anode common terminal
- 504: cathode side terminal of first LED group
- 505: cathode side terminal of second LED group
- 600: terminal count converter
- 601: first terminal
- 602: second terminal
- 603: third terminal
- 604, 604a: first diode
- 605, 605a: second diode

## Claims

1. An LED light-emitting device, comprising:
a three-terminal LED circuit which includes a first LED group constituted by a single light-emitting diode or a plurality of light-emitting diodes connected in series, a second LED group constituted by a single light-emitting diode or a plurality of light-emitting diodes connected in series, and an LED common terminal shared by anodes of the first LED group and the second LED group or cathodes thereof, and which has three terminals including both end terminals of the LED groups; and
a three-terminal regulator circuit which includes a first regulating unit constituted by a unidirectional current regulator circuit, a second regulating unit constituted by a unidirectional current regulator circuit, and a regulator circuit common terminal connected with the first regulating unit and the second regulating unit and shared by anodes or cathodes thereof so as to exhibit a reverse polarity with respect to the three-terminal LED circuit, wherein
a two-terminal circuit is configured by connecting the LED common terminal and the regulator circuit common terminal with each other, and
connecting the remaining two terminals of the three-terminal LED circuit with the remaining two terminals of the three-terminal regulator circuit respectively.

2. The LED light-emitting device according to claim 1, wherein
the first regulating unit and the second regulating unit include any one of a diode or a Zener diode.

3. The LED light-emitting device according to claim 1 or 2, wherein
the first regulating unit and the second regulating unit include a constant current circuit.

4. The LED light-emitting device according to any one of claims 1 to 3, wherein
the emission wavelength of the first LED group and the emission wavelength of the second LED group are different from each other.

5. The LED light-emitting device according to any one of claims 1 to 4, wherein
chromaticity of light emitted by the first LED group and chromaticity of light emitted by the second LED group are different from each other.

6. The LED light-emitting device according to any one of claims 1 to 5, further comprising
a switch that is located between a power source and the LED common terminal to supply current to the LED common terminal.

7. A terminal count converter, connected with a three-terminal LED circuit which includes a first LED group constituted by a single light-emitting diode or a plurality of light-emitting diodes connected in series, a second LED group constituted by a single light-emitting diode or a plurality of light-emitting diodes connected in series, and an LED common terminal shared by anodes of the first LED group and the second LED group or cathodes thereof, and which has three terminals including both end terminals of the LED groups, the terminal count converter comprising:
a three-terminal regulator circuit which includes a first regulating unit constituted by a unidirectional current regulator circuit, a second regulating unit constituted by a unidirectional current regulator circuit, and a regulator circuit common terminal connected with the first regulating unit and the second regulating unit and shared by anodes or cathodes thereof so as to exhibit a reverse polarity with respect to the three-terminal LED circuit, wherein
the LED common terminal of the three-terminal LED circuit and the regulator circuit common terminal of the three-terminal regulator circuit are connected with each other, and
the remaining two terminals of the three-terminal LED circuit are connected with the remaining two terminals of the three-terminal regulator circuit respectively, so that the three-terminal LED circuit functions as a two-terminal circuit.

8. An LED illumination apparatus, comprising
the LED light-emitting device according to any one of claims 1 to 6.
